(19) **Europäisches Patentamt**
**European Patent Office**
**Office européen des brevets**

(11) **EP 4 310 542 B1**

(12) **EUROPEAN PATENT SPECIFICATION**

(45) Date of publication and mention
of the grant of the patent:
**30.07.2025  Bulletin 2025/31**

(21) Application number: **23179719.2**

(22) Date of filing: **16.06.2023**

(51) International Patent Classification (IPC):
*G01S 13/34* (2006.01)    *G01S 13/50* (2006.01)
*G01S 7/35* (2006.01)    *G01S 15/34* (2006.01)
*G01S 15/58* (2006.01)

(52) Cooperative Patent Classification (CPC):
**G01S 13/342; G01S 7/358; G01S 7/536;
G01S 13/347; G01S 13/505; G01S 15/34;
G01S 15/586**

(54) **DETECTION DEVICE AND DETECTION METHOD**

DETEKTIONSVORRICHTUNG UND DETEKTIONSVERFAHREN

DISPOSITIF DE DÉTECTION ET PROCÉDÉ DE DÉTECTION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **20.07.2022  JP 2022115747**

(43) Date of publication of application:
**24.01.2024  Bulletin 2024/04**

(73) Proprietor: **FCL Components Limited
Tokyo 140-0002 (JP)**

(72) Inventors:
• **SAKURAI, Masaru
Tokyo, 140-0002 (JP)**

• **IIZUKA, Shunichi
Tokyo, 140-0002 (JP)**
• **MARUYAMA, Kimihiro
Tokyo, 140-0002 (JP)**
• **SHINOHARA, Fumiya
Tokyo, 140-0002 (JP)**
• **OKADA, Ryohei
Tokyo, 140-0002 (JP)**

(74) Representative: **Haseltine Lake Kempner LLP
Cheapside House
138 Cheapside
London EC2V 6BJ (GB)**

(56) References cited:
JP-A- 2017 134 795      US-A- 4 078 235
US-A1- 2018 356 511

## Description

FIELD

A certain aspect of the embodiments is related to a detection device and a detection method.

BACKGROUND

There is known a detection device that measures a distance to an object, a speed of the object, and the like using an electromagnetic wave or a sound wave. In such a detection device, it is known to use both a Doppler system and an FM-CW (Frequency Modulated Continuous Wave) system. These techniques are disclosed in Patent Document 1 (Japanese Laid-Open Patent Publication No. 2019-49521), Patent Document 2 (Japanese Laid-Open Patent Publication No. 07-77575), and Patent Document 3 (Japanese Laid-Open Patent Publication No. 09-178839). Reference may also be made to: US 2018/356511 A1 which relates to an FMCW RADAR sensor for motor vehicles; US 4 078 235 A which relates to an obstacle detecting system; or JP 2017 134795 A which relates to a watching device and watching system.

SUMMARY

It is desirable to provide a detection device and a detection method that appropriately measure the motion and the distance of an object.

The present invention is defined by the appended independent claims to which reference should now be made. Specific embodiments are defined in the dependent claims. According to one arrangement of the present disclosure, there is provided a detection device including a transmitter configured to transmit an electromagnetic wave or a sound wave as a transmission signal, a receiver configured to receive a signal obtained by reflecting the transmission signal from an object, as a reception signal, a mixer configured to mix the transmission signal and the reception signal and output a mixed signal as an intermediate signal, and a detector configured to detect a motion of the object and a distance to the object from the intermediate signal, wherein the detector performs first sampling of the intermediate signal at a first sampling time in a first time interval when detecting the motion of the object, and the detector performs second sampling at a second sampling time in a second time interval smaller than the first time interval, between adjacent first sampling times when detecting the distance to the object.

According to another arrangement of the present disclosure, there is provided a detection method causing a processor to execute a process. The process includes detecting the motion of an object by performing first sampling of an intermediate signal at a first sampling time in a first time interval, the intermediate signal being obtained by mixing a transmission signal which is an electromagnetic wave or a sound wave and a reception signal obtained by reflecting the transmission signal on the object, and detecting a distance to the object by performing second sampling of the intermediate signal at a second sampling time in a second time interval smaller than the first time interval, between adjacent first sampling times.

According to the detection device and the detection method according to embodiments of aspects of the present disclosure, it is possible to appropriately measure the motion and the distance of the object.

BRIEF DESCRIPTION OF DRAWINGS

The invention is described, by way of example only, with reference to the following drawings, in which:

FIG. 1 is a block diagram illustrating the periphery of a detection device according to a first embodiment.
FIG. 2 is a flowchart illustrating processing executed by a processing unit of the detection device according to the first embodiment.
FIG. 3 is a timing chart of the detection device according to the first embodiment.
FIG. 4 is a timing chart of the detection device according to the first embodiment.
FIG. 5 is a timing chart illustrating the voltages of intermediate signals IF, IF1 and IF2 with respect to time in the first embodiment.
FIG. 6 is a timing chart illustrating the voltage of the intermediate signal IF1 with respect to time in the first embodiment.
FIG. 7 is a timing chart illustrating the voltage of the intermediate signal IF2 with respect to time in the first embodiment.
FIG. 8 is a block diagram illustrating the periphery of a detection device according to a second embodiment.
FIG. 9 is a timing chart of the detection device according to the second embodiment.
FIG. 10 is another example of a timing chart of the detection device according to the second embodiment.

DESCRIPTION OF EMBODIMENTS

The detection device according to the present embodiment determines the position of the object, in other words, the distance from the detection device, while detecting a signal in a very low frequency band such as vibration of the body, such as heartbeat or respiration, or small vibration of a building or movement of the ground.

Since the motion velocity of such an object is small and the degree of change in distance is very small, it is not necessary to measure the distance frequently.

In the present embodiment, a Doppler signal is used to detect the motion or velocity of the object such as a slow shake, and the detected signal is sampled at a sampling frequency of about several hundred sps and at intervals of several milliseconds. On the other hand, an FM-CW signal is used to measure the distance of the object, and the detected signal is sampled at a sampling frequency of several tens of ksps and at intervals of several tens of microseconds. In this way, the difference between both sampling frequencies is made several hundred times. Therefore, the FM-CW signal can be sampled several hundred times during one sampling interval of the Doppler signal. As a result, the distance to the object can be determined before the analysis of the Doppler signal is completed.

At this time, it is preferable to appropriately perform switching between sampling of the Doppler signal and sampling of the FM-CW signal.

Embodiments will be described below with reference to the drawings.

(First Embodiment)

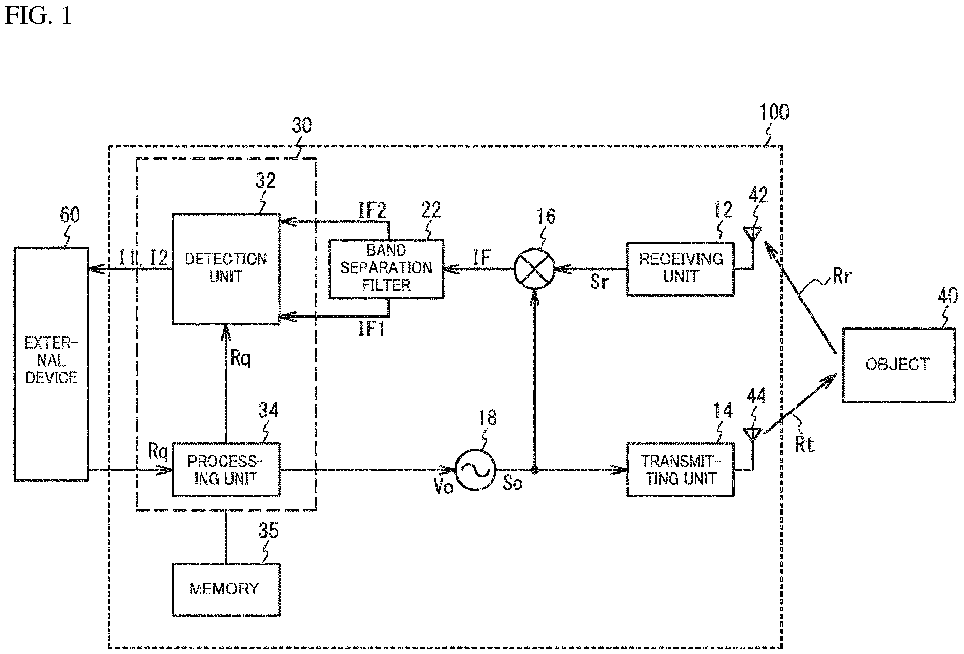

FIG. 1 is a block diagram illustrating the periphery of a detection device according to a first embodiment. A detection device 100 includes a receiving unit 12, a transmitting unit 14, a mixer 16, an oscillator 18, a band separation filter 22, a processing unit 30, and a memory 35. The processing unit 30 is, for example, a processor such as a CPU (Central Processing Unit) or a microcomputer, and functions as a detection unit 32 and a control unit 34 in cooperation with software. Further, the processing unit 30 executes detection processing. The memory 35 is a non-volatile memory or a volatile memory, and stores setting conditions for detection, data during calculation of information, a program, and the like. An external device 60 may be a processor different from the processor 30. The external device 60 may be a higher-level application in the same processor as the processing unit 30.

The control unit 34 outputs a control signal Vo for controlling the frequency of an oscillation signal So to the oscillator 18. The oscillator 18 outputs an oscillation signal So having a frequency fo set based on the control signal Vo. The transmitting unit 14 outputs a transmission signal Rt having the same frequency as the oscillation signal So to an object 40 in the space via an antenna 44. The transmission signal Rt is, for example, an electromagnetic wave such as a microwave or a millimeter wave, or an acoustic wave. When the transmission signal Rt is the electromagnetic wave, the frequency of the transmission signal Rt is, for example, 10 GHz to 100 GHz.

The transmission signal Rt is reflected at the object 40. The receiving unit 12 receives a reception signal Rr via an antenna 42. The reception signal Rr includes a signal reflected from the object 40. The receiving unit 12 outputs a reception signal Sr to the mixer 16. The mixer 16 mixes the oscillation signal So and the reception signal Sr, and outputs a mixed intermediate signal IF. The frequency of the intermediate signal IF corresponds to a difference between the frequency fo of the oscillation signal So and the frequency of the reception signal Sr. The band separation filter 22 separates the intermediate signal IF into an intermediate signal IF1 having a low frequency band and an intermediate signal IF2 having a high frequency band. Based on the intermediate signal IF1, the detection unit 32 detects the relative motion between the object 40 and the detection device 100, such as the shake of the object 40, and outputs corresponding information I1. For example, a Doppler method is used to detect the motion of the object 40. The detection unit 32 detects the distance between the object 40 and the detection device 100 based on the intermediate signal IF2, and outputs corresponding information I2. For example, an FM-CW system is used for the detection of the distance.

The detection unit 32 outputs the information I1 and I2 to the external device 60. When the detection unit 32 detects the motion of the object 40 by the Doppler method, the control unit 34 sets the frequency fo of the oscillation signal So to a constant frequency fo1. When a request Rq for distance measurement is input from the external device 60 to the control unit 34, the control unit 34 controls the oscillator 18 so as to sweep the frequency fo of the oscillation signal So and causes the detection unit 32 to detect the distance by the FM-CW method.

The detection device 100 is installed, for example, in a room, and the object 40 is, for example, a human or an animal. At this time, the motion-related information I1 is, for example, vital information of a human or an animal, and corresponds to, for example, vibrations of the chest caused by heartbeat or respiration. In this case, the amount of motion of the object 40 is, for example, 0.1 mm to 10 mm (about 1 mm as an example), the frequency of vibration is, for example, 10 Hz to 100 Hz (about 60 Hz as an example), and the velocity of the object 40 is, for example, 1 cm/s to 100 cm/s (about 30 cm/s as an example). Thus, the motion velocity of the object 40 is very slow. The motion of the object 40 detected by the detection device 100 may be a small vibration of the building or a vibration of the ground in addition to the vital information.

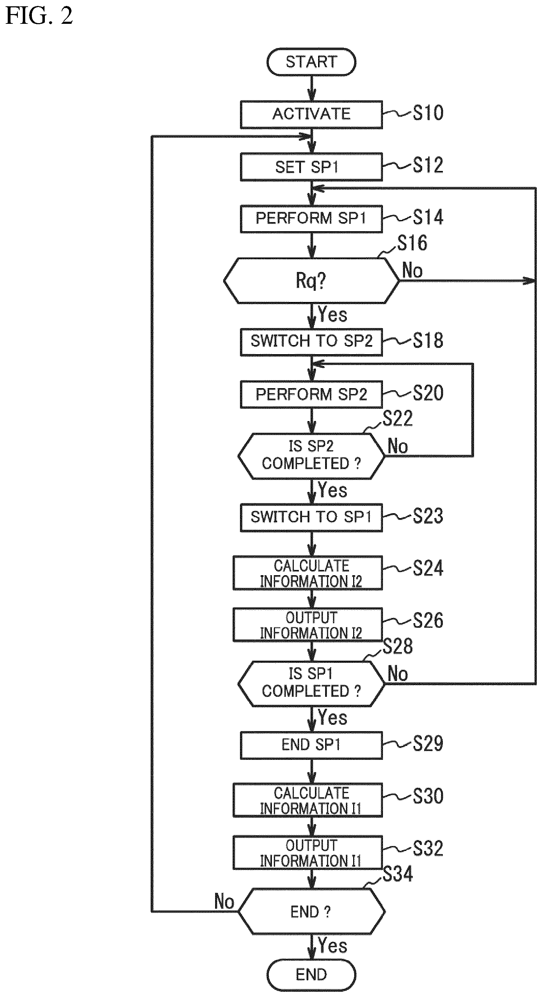

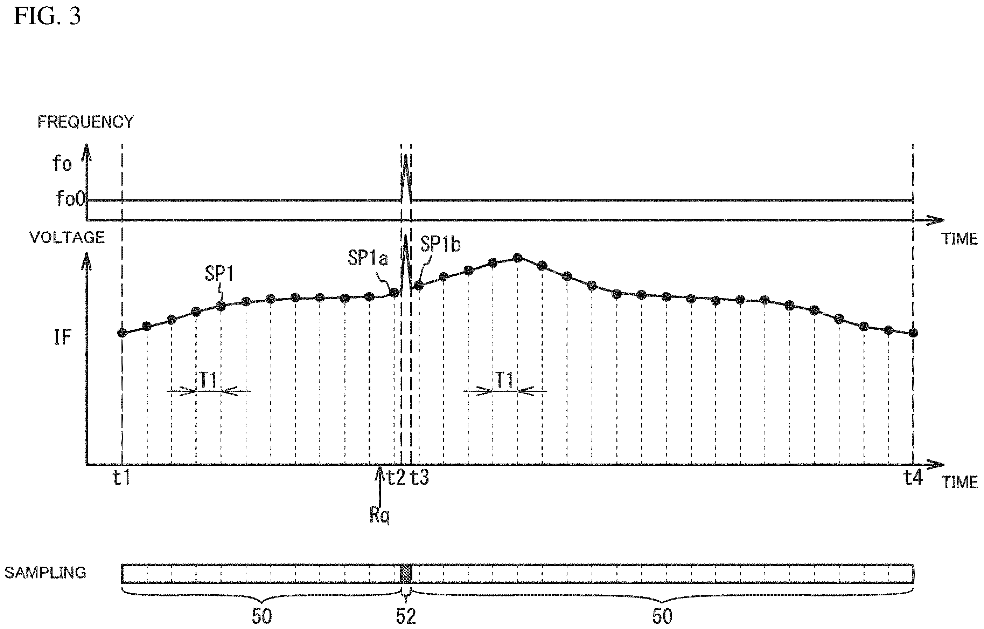

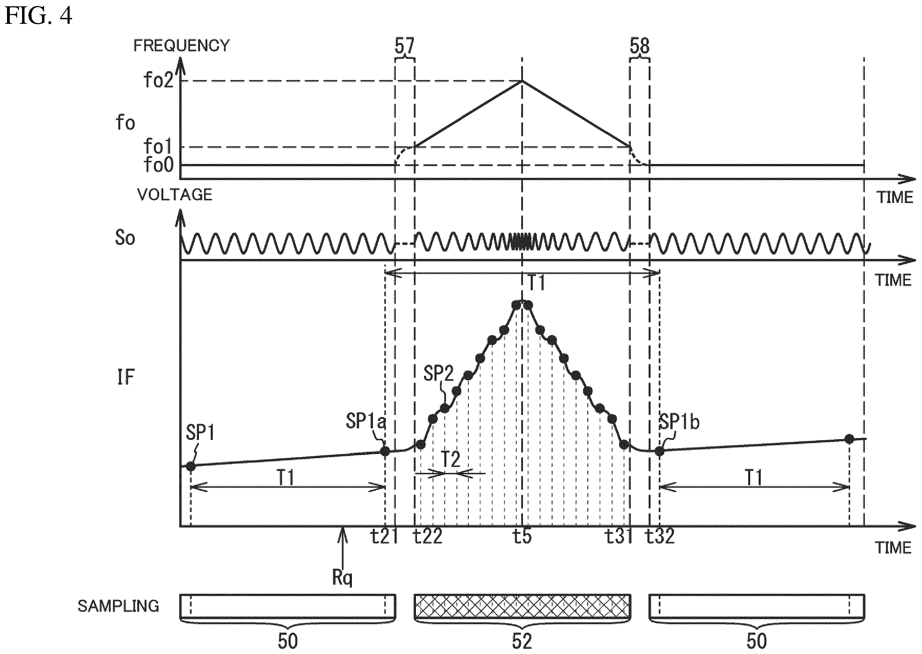

FIG. 2 is a flowchart illustrating processing executed by the processing unit 30 of the detection device 100 according to the first embodiment. FIG. 3 is a timing chart of the detection device 100 according to the first embodiment. FIG. 4 is an enlarged view of FIG. 3. In FIGs. 3 and 4, fo represents the frequency of the oscillation signal So (the frequency of the transmission signal Rt), IF represents the voltage of the intermediate signal IF, sampling represents periods 50 and 52 during which the detection unit 32 samples the intermediate signal IF, and vertical dotted lines in the periods 50 and 52 represent sampling timings. In FIG. 4, So denotes the voltage of the oscillation signal So. In FIGs. 3 and 4, black circles on solid lines of IF indicate voltages at sampling times SP1, SP1a, SP1b, and SP2 at which the intermediate signal IF is sampled. Hereinafter, the sampling of the intermediate signal IFI is referred to as "sampling SP1" and the sampling of the intermediate signal IF2 is referred to as "sampling SP2". The period 50 is a period during which the detection unit 32 performs the sampling SP1, and the period 52 is a period during which the detection unit 32 performs the sampling SP2.

As illustrated in FIG. 2, the detection device 100 is activated by turning on the power of the detection device 100 or the like (S10). The processing unit 30 sets the sampling frequency (sampling interval T1) of the sampling SP1 of the intermediate signal IF1 (S12). For example, the sampling frequency is set to 200 sps and the sampling interval T1 is set to 5 ms. The number of sampling times is, for example, 200. The control unit 34 sets the frequency of the oscillation signal So to a constant frequency fo0. The sampling frequency, sampling interval, sampling number of times and the like of the intermediate signal IF1 are set in advance and may be stored in the memory 35 or may be acquired from the external device 60. The detection unit 32 starts sampling of the intermediate signal IF1 at time t1, and performs the sampling SP1 in the period 50 (S14).

As illustrated in FIG. 2, the control unit 34 determines whether the request Rq for distance measurement is input (S16). The request Rq is input from, for example, the external device 60. The request Rq may be input at regular intervals. If the determination of S16 is "No", the process returns to S14. By repeating S14 at interval T1, the sampling SP1 is executed at constant interval T1 in period 50.

If the determination of S16 is "Yes", the detection unit 32 switches the sampling process from the sampling SP1 to the sampling SP2 (S18). For example, the sampling frequency of the sampling SP2 is 40 ksps and the sampling interval T2 is 25 μs. The sampling frequency of the sampling SP2 in the period 52 is set to 80 times, for example. The sampling frequency, sampling interval and sampling number of the intermediate signal IF2 are set in advance and may be stored in the memory 35 or may be acquired from the external device 60.

In the example of FIG. 3, the request Rq is input before the sampling time SP1a. At time t2 after the sampling time SP1a, the detection unit 32 switches sampling from the sampling SP1 to the sampling SP2. The control unit 34 sweeps the frequency fo of the oscillation signal So.

As illustrated in FIG. 4, in the period 50, the frequency fo of the oscillation signal So is fo0 and constant. When the request Rq is input, at time t21 after the sampling time SP1a, the control unit 34 sets the frequency fo to the frequency fo1 for executing the FM-CW system. Thereafter, the control unit 34 executes the sampling SP2 from time t22. A period 57 between the times t21 and t22 is a period until the oscillation signal So in which the frequency fo is changed from fo0 to fo1 is stabilized. At time t22, the frequency fo is stabilized at the frequency fo1. The period 52 is defined between the start time t22 of the sampling SP2 and the end time t31 of the sampling SP2. The frequency of the oscillation signal So is swept from time t22, and the frequency fo increases linearly from fo1 with time, and reaches fo2 at time t5. In the period between time t5 and time t31, the frequency fo decreases linearly from fo2 to fo1 with time.

As illustrated in FIG. 2, the detection unit 32 performs the sampling SP2 of the intermediate signal IF2 (S20). The detection unit 32 determines whether the sampling SP2 is completed (S22). When the number of times of sampling does not reach the predetermined number of times of sampling, the detection unit 32 determines that S22 is No and returns to S20. By repeating S20 at interval T2, the sampling SP2 is executed at constant interval T2 in period 52.

On the other hand, when the predetermined number of times of sampling is reached and Yes is determined in S22, the detection unit 32 switches sampling from the sampling SP2 to the sampling SP1 (S23). At this time, as illustrated in FIG. 4, the control unit 34 sets the frequency fo of the oscillation signal So to a constant fo0 at time t31. A period 58 between the times t31 and t32 is a period until the oscillation signal So in which the frequency fo is changed from fo1 to fo0 is stabilized. At time t32, the frequency fo is stabilized at the frequency fo0. The period from time t32 is the period 50.

As illustrated in FIG. 2, the detection unit 32 calculates the distance of the object 40 using the FM-CW method based on the sampling data acquired in the period 52 (S24). The detection unit 32 outputs the information I2 corresponding to the calculated distance to the external device 60 (S26). The detection unit 32 determines whether the sampling SP1 is completed (S28). The detection unit 32 determines that S28 is No when a predetermined number of sampling times is not reached, and determines that S28 is Yes when a predetermined number of sampling times is reached. If S28 is "No", the process returns to S14.

As illustrated in FIGs. 3 and 4, the sampling SP1 is executed at sampling time SP1b when interval T1 has elapsed from sampling time SP1a after time t32. Thereafter, sampling SP1 is executed at interval T1 in period 50. The interval between the sampling time SP1a and the sampling time SP1b is T1, which is the same as the interval T1 in the period 50. For example, when the sampling frequency of the sampling SP2 is 40 ksps and the number of times of sampling performed in the period 52 is 80, the length of the period 52 is 2 ms. Therefore, the period 52 falls within the interval T1 (5 ms) of the sampling SP1.

As illustrated in FIG. 2, when S28 is Yes, the detection unit 32 ends the sampling SP1 (S29). In the example of FIG. 3, the period 50 ends at time t4. The detection unit 32 calculates the motion of the object 40 using the Doppler method based on the sampling data acquired in the period 50 (S30). The detection unit 32 outputs the calculated information I1 regarding the motion of the object 40 to the external device 60 (S32). The detection unit 32 determines whether or not a series of processes is ended (S34). For example, when the power supply is turned off or when there is a request for completion from the external device 60, the detection unit 32 determines that S34 is Yes. If S34 is "No", the process returns to step S12, and if S34 is "Yes", the process ends.

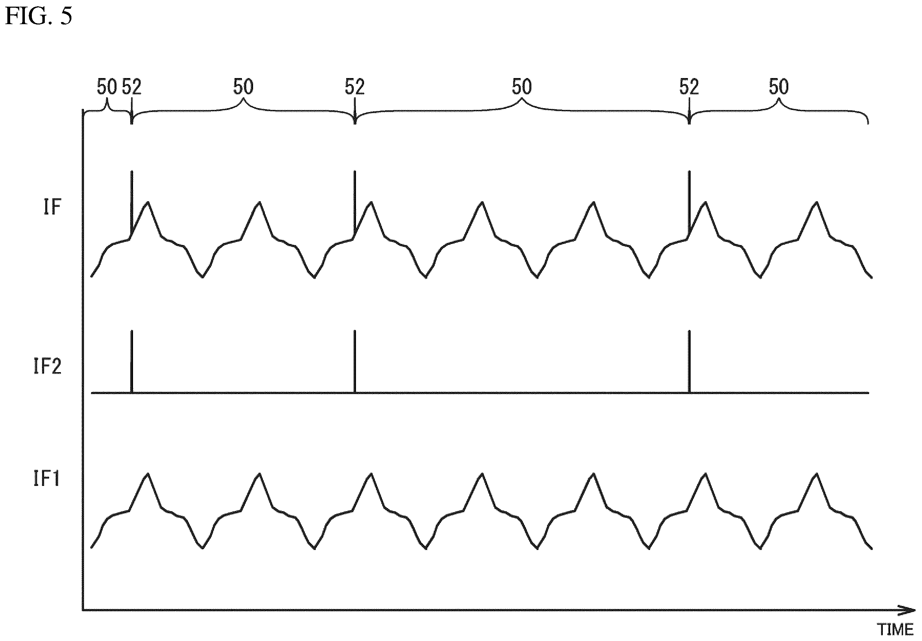

FIG. 5 is a timing chart illustrating voltage changes of the intermediate signals IF, IF1 and IF2 with respect to time in the embodiment. As illustrated in FIG. 5, in the intermediate signal IF, a periodic signal having a relatively low frequency is superimposed with a sharp signal having a high frequency. The band separation filter 22 separates the intermediate signal IF into a low-frequency intermediate signal IF1 and a high-frequency intermediate signal IF2, and outputs the intermediate signals IF1 and IF2 to the detection unit 32. The intermediate signal IF1 is a signal when the motion and the velocity of the object 40 are detected by the Doppler method. The intermediate signal IF2 is a signal when the distance of the object is detected by the FM-CW method, and corresponds to the intermediate signal IF of the period 52 in FIGs. 3 and 4.

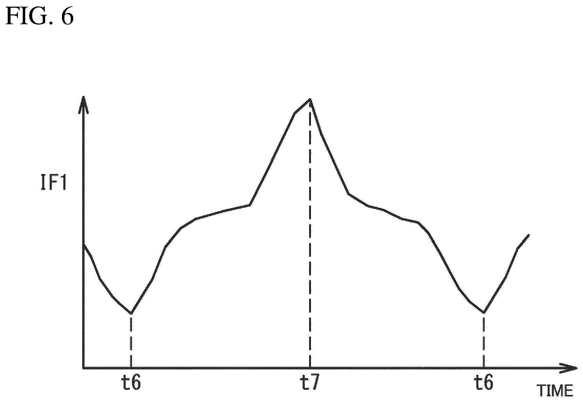

FIG. 6 is a timing chart illustrating the voltage change of the intermediate signal IF1 with respect to time in the first embodiment. An example in which the intermediate signal IF1 is a signal corresponding to the heart rate of a human or the like will be described. As illustrated in FIG. 6, the intermediate signal IF1 becomes minimum at time t6 and becomes maximum at time t7. Heart rate can be measured by measuring the interval between times t6 and t7 or between adjacent times t6. It is also possible to measure the velocity of the object 40 from the frequency component when the intermediate signal IF1 is Fourier-transformed. In this case, the velocity V of the object 40 can be calculated by Equation 1.

$$V = C{\times}Fiv / (2 \, Fc) \qquad \text{(Equation 1)}$$

Wherein C is the velocity of light, Fiv is the frequency component of the intermediate signal IF1, and Fc is the frequency of the transmission signal Rt (frequency fo0 of the oscillation signal So). When a plurality of objects 40 exist and the motions (for example, heart rate) of the objects 40 are different from each other, the motion of each object 40 (for example, heart rates of the plurality of objects 40) can also be measured.

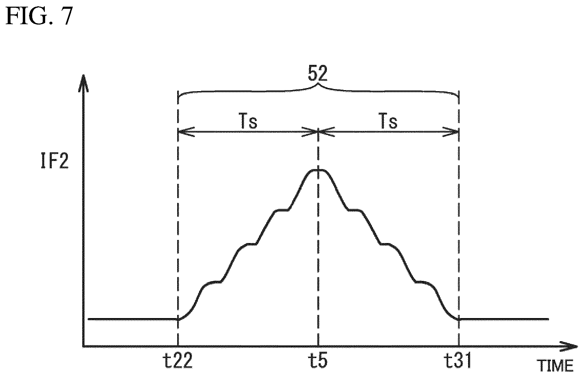

FIG. 7 is a timing chart illustrating the voltage change of the intermediate signal IF2 with respect to time in the period 52. As illustrated in FIG. 7, the intermediate signal IF2 increases from time t22 to time t5, and the intermediate signal IF2 decreases from time t5 to time t31. A waveform having a short wavelength is superimposed on the intermediate signal IF2 illustrated in FIG. 7. The frequency of the short-wavelength waveform corresponds to the distance to the object 40. The distance R of the object 40 can be calculated by Equation 2.

$$R = C{\times}Ts{\times}Fir / (2 \, bw) \qquad \text{(Equation 2)}$$

Wherein C is the velocity of light. Ts is a sweep period, which is a period between time t22 and time t5 or a period between time t5 and time t31. Fir denotes a frequency component of the intermediate signal IF2, and Bw denotes a displacement amount of the frequency fo, which is fo2-fo1. Fir can be calculated by Fourier transformation of the intermediate signal IF2, and the distance R to the object 40 can be calculated using Fir. In the period 52, a sweep for increasing the frequency fo from fo1 to fo2 from time t22 to time t5 and a sweep for decreasing the frequency fo from fo2 to fo1 from time t5 to time t31 are performed. In this case, since the distance R to the object 40 can be measured in both the sweep period in which fo increases and the sweep period in which fo decreases, an average value of the distances R calculated in respective sweep periods may be used as the distance R to the object 40. When the plurality of objects 40 exist, the distance R of the individual object 40 can also be measured.

An example of the sampling SP1 of the intermediate signal IF1 and the sampling SP2 of the intermediate signal IF2 will be described. Assuming that the ratio of the FM-CW frequency and the Doppler frequency is Z:1, the following equation 3 is obtained from the relationship between Equation 1 and Equation 2.

$$Z \, (2 \, Fc{\times}V/C) = 2 \, Bw{\times}R / (C \times Ts)$$

$$Z = Bw{\times}R / (Ts{\times}Fc{\times}V) \qquad \text{(Equation 3)}$$

As an example, the object 40 is a human and the heartbeat is measured. The motion velocity of the chest due to heartbeat is about 0.062m/s, for example. When 24.15 GHz is used as Fc, Fiv becomes 10 Hz from Equation 1. Further, it is assumed that Bw is 200 MHz and Ts is 1 ms. When the distance R of the object 40 is 6 m, the condition for making measurement by the FM-CW method compatible with measurement by the Doppler method is Z = 801 from Equation 3. Therefore, Fir = Fiv× 801, that is, Fir is about 8 kHz. On the other hand, when the distance R is changed from 6 m to 0.5 m, Z is 67 (Z = 67) in order to make the FM-CW system compatible with the Doppler system. That is, the FM-CW frequency may be 67 times or more of the Doppler frequency. Here, when switching between the FM-CW system and the Doppler system, the band separation filter 22 is used to separate the intermediate signal IF1 at the time of measurement by the Doppler system from the intermediate signal IF2 at the time of measurement by the FM-CW system in order to prevent the intermediate signals IF detected by the respective systems from overlapping each other. If the difference between Fiv and Fir is set to 100 times (Fir = 1 kHz) or more, which is higher than 67 times obtained by Equation 3, the separation of the intermediate signals IF1 and IF2 by the filter becomes easier.

The sampling frequency of the sampling SP1 (IF1) is, for example, 100 sps to 1000 sps, and the sampling frequency of the sampling SP2 (IF2) is, for example, 10 ksps to 100 ksps. As described above, since the difference between the frequencies of IF1 and IF2 is 100 times or more, the sampling frequency of the sampling SP2 is 100 times or more of the sampling frequency of the sampling SP1, and the sampling interval T2 is 1/100 times or less of the sampling interval T1. Since there is a 100-fold difference in the sampling frequency, the sampling of the intermediate signal IF2 can be completed by generating a signal corresponding to the FM-CW system in a gap of the sampling interval T1. When the sampling interval T1 of the intermediate signal IF1 is 5 ms and the intermediate signal IF2 corresponding to the FM-CW system is sampled at 20 ksps, sampling data of 100 times can be obtained at the sampling interval T1.

According to the first embodiment, as illustrated in FIGs. 2 and 3, the detection unit 32 detects the motion of the object 40 by performing, on the intermediate signal IF1, the first sampling SP1 for sampling the intermediate signal IF1 at the first sampling time of the sampling interval T1 (first time interval). As illustrated in FIGs. 2 and 4, the detection unit 32 detects the distance to the object 40 by performing, on the intermediate signal IF2, the second sampling SP2 for sampling the intermediate signal IF2 at the second sampling time of the interval T2 (second time interval) between the adjacent sampling time SP1a and sampling time SP1b. When the motion of the object 40 is fast, the motion of the object 40 cannot be detected unless the sampling interval T1 is shortened. On the other hand, when the motion of the object 40 is slow, even if the sampling interval T1 is long, the motion of the object 40 can be detected sufficiently. When the motion of the object 40 is slow, the distance to the object 40 does not need to be detected frequently because the degree of change in distance is small. Therefore, the sampling SP2 is executed during the sampling interval T1. Thus, the detection unit 32 can complete the detection of the distance to the object 40 while detecting the motion of the object 40. As an example in which the motion of the object 40 is slow, there is a case in which the object 40 is a human or an animal and the information I1 relating to the motion is vital information of the object 40.

As illustrated in FIGs. 3 and 4, the transmitting unit 14 outputs the transmission signal having the constant frequency fo0 in the period 50 of the first period in which the detection unit 32 performs the first sampling SP1, excluding the period 52 (second period) in which the detection unit 32 performs the second sampling SP2. The transmission unit 14 outputs the transmission signal obtained by sweeping the frequency fo in the period 52. Thus, the detection unit 32 can detect the distance of the object 40 using the FM-CW method while detecting the motion of the object using the Doppler method.

The band separation filter 22 separates the intermediate signal IF into the first intermediate signal IF1 of a first frequency band and a second intermediate signal IF2 of a second frequency band higher than the first frequency band, as illustrated in FIG. 5, and outputs the separated signals to the detection unit 32. The detection unit 32 performs the first sampling SP1 on the intermediate signal IF1 and performs the second sampling SP2 on the intermediate signal IF2. Therefore, the detection unit 32 can detect the motion from the intermediate signal IF1 and the distance from the intermediate signal IF2 in parallel.

The transmission signal Rt may be the electromagnetic wave or the acoustic wave, but in order to detect a slow motion, the frequency fo is preferably an electromagnetic wave of 10 GHz or more and more preferably an electromagnetic wave of 20 GHz or more.

(Second Embodiment)

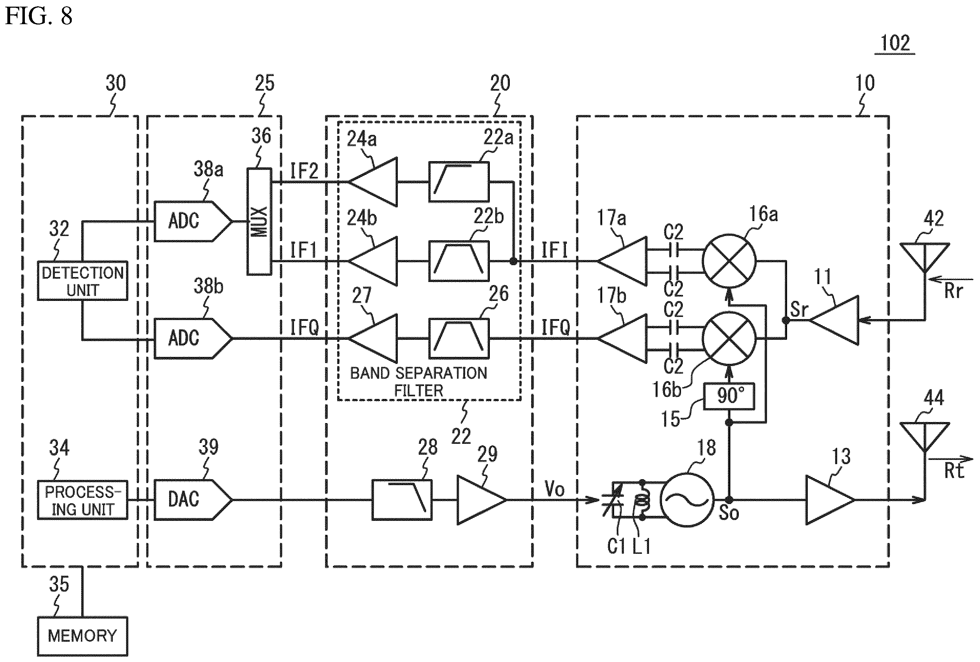

FIG. 8 is a block diagram illustrating the periphery of a detection device according to a second embodiment. As illustrated in FIG. 8, a detection device 102 according to the second embodiment includes an RF (Radio Frequency) processing unit 10, an IF processing unit 20, a conversion processing unit 25, the processing unit 30, and the memory 35. The RF processing unit 10 is a circuit for processing high-frequency signals, and includes an LNA (Low Noise Amplifier) 11, a PA (Power Amplifier) 13, a phase shifter 15, mixers 16a and 16b, amplifiers 17a and 17b, and the oscillator 18. The IF processing unit 20 is a circuit for processing an intermediate signal, and includes a HPF (High Pass Filter) 22a, BPFs (Band Pass Filter) 22b and 26, a LPF (Low Pass Filter) 28, and amplifiers 24a, 24b, 27, and 29. The conversion processing unit 25 includes a multiplexer (MUX) 36, analog-digital converters (ADC) 38a and 38b, and a digital-analog converter (DAC) 39. The processing unit 30 is, for example, a processor, cooperates with software, and functions as the detection unit 32 and the control unit 34 of the first embodiment. The memory 35 is the same as the memory 35 of the first embodiment.

The DAC 39 converts a control signal, which is a digital signal output from the control unit 34, into an analog signal. The LPF 28 suppresses a high frequency component of the control signal Vo which is an analog signal. The amplifier 29 amplifies the control signal Vo. The oscillator 18 is a VCO (Voltage Controlled Oscillator) and includes, for example, an inductor L1 and a variable capacitor C1 connected in parallel. When the capacitance of the variable capacitor C1 is changed by the control signal Vo, the frequency fo of the oscillation signal So is changed. The PA 13 corresponds to the transmitting unit 14 of the first embodiment, amplifies the oscillation signal So, and transmits the amplified signal as a transmission signal Rt from the antenna 44.

The LNA 11 corresponds to the receiving unit 12 of the first embodiment, amplifies the reception signal Rr received via the antenna 42, and outputs the amplified signal as the reception signal Sr. The mixer 16a mixes the reception signal Rr and the oscillation signal So, and outputs the mixed signal to the differential amplifier 17a via the capacitor C2. The amplifier 17a differentially amplifies the input signal and outputs the amplified signal as an intermediate signal IFI. The phase shifter 15 delays the phase of the oscillation signal So by 90 degrees. The mixer 16b mixes the reception signal Rr and the phase-shifted oscillation signal So, and outputs the mixed signal to the differential amplifier 17b via the capacitor C2. The amplifier 17b differentially amplifies the input signal and outputs the amplified signal as an intermediate signal IFQ.

The amplifiers 24a, 24b, 27, the HPF 22a, the BPFs 22b and 26 correspond to the band separation filter 22 of the first embodiment. The BPF 22b suppresses the high and low frequency components of the intermediate signal IFI. The BPF 22b allows a signal of, for example, 0.1 to 10 Hz to pass through and suppresses other signals. The amplifier 24b amplifies the filtered signal and outputs the amplified signal as an intermediate signal IF1. The HPF 22a suppresses the low frequency component of the intermediate signal IFI. The HPF 22a allows, for example, a signal of 1 kHz or higher to pass through. The amplifier 24a amplifies the filtered signal and outputs the amplified signal as an intermediate signal IF2. The BPF 26 suppresses high frequency components and low frequency components of the intermediate signal IFQ. The BPF 26 passes a signal of 0.1 to 10 Hz, for example, and suppresses other signals. The amplifier 27 amplifies the filtered signal and outputs the amplified signal as an intermediate signal IFQ.

The MUX 36 outputs the intermediate signal IF1 to the ADC 38a in the period 50 and outputs the intermediate signal IF2 to the ADC 38a in the period 52 according to an instruction from the detection unit 32. The ADC 38a samples the intermediate signal IF1 and converts it into a digital signal in the period 50 and samples the intermediate signal IF2 and converts it into a digital signal in the period 52 according to an instruction from the detection unit 32. The ADC 38b samples the intermediate signal IFQ and converts it into a digital signal according to an instruction from the detection unit 32. Sampling of the intermediate signals IF1 and IFQ corresponds to sampling SP1 in the first embodiment. Sampling of the intermediate signal IF2 corresponds to sampling SP2 in the first embodiment. The ADCs 38a and 38b output the converted digital signals to the detection unit 32. Other configurations are the same as those of the first embodiment.

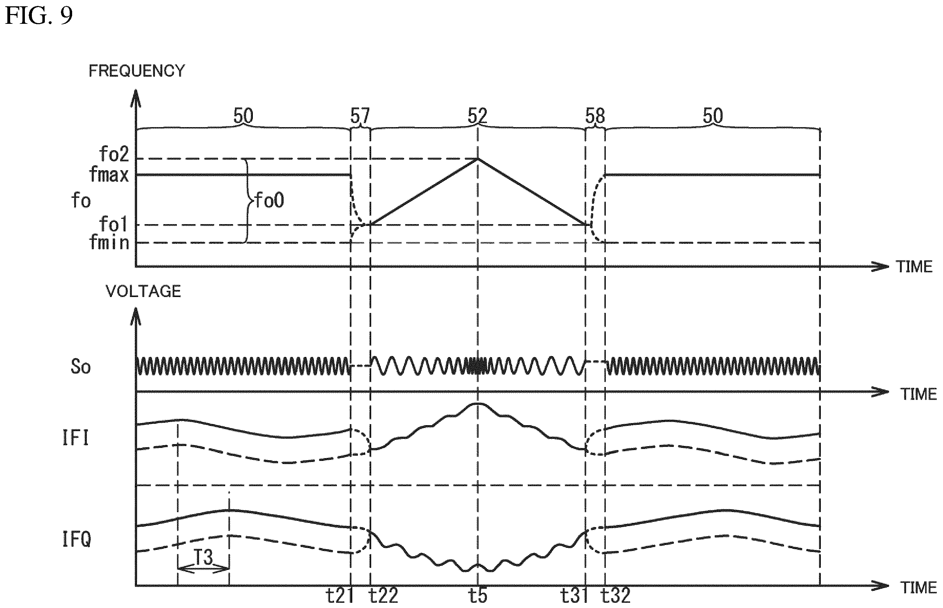

FIG. 9 is a timing chart of the detection device according to the second embodiment. Fo denotes the frequency of the oscillation signal So, So denotes the voltage of the oscillation signal, IFI denotes the voltage of the intermediate signal IFI, and IFQ denotes the voltage of the intermediate signal IFQ.

The frequency fo0 in the period 50 can be switched to a plurality of channels. For example, when a plurality of detection devices 102 are used in the same place (for example, in the same room), the frequency fo0 of the oscillation signal So output from each detection device 102 is changed so that the transmission signals of the plurality of detection devices 102 do not interfere with each other. Fmax is the highest frequency fo0 among the plurality of channels, and fmin is the lowest frequency fo0 among the plurality of channels. The frequencies fo1 and fo2 in the period 52 are common to the plurality of detection devices 102. Since the period 52 is very short, even if the frequencies fo1 and fo2 are common to the plurality of detection devices 102, an interference between the detection devices 102 hardly occurs. The solid lines of IFI and IFQ correspond to IFI and IFQ when fo0 is fmax, and the dashed lines of IFI and IFQ correspond to IFI and IFQ when fo0 is fmin.

The period 57 between the times t21 and t22 is a period for changing the frequency fo from fmax to fo1 or from fmin to fo1. The period 58 between the times t31 and t32 is a period for changing the frequency fo from fo1 to fmax or from fo1 to fmin. The periods 57 and 58 are periods until the signal whose frequency fo is changed becomes stable.

By comparing the IFI with the IFQ, it can be determined whether the object 40 is away from or closer to the detection device 102. In the example of FIG. 9, in the period 50, IFQ lags IFI by a period T3. In this case, it can be determined that the object 40 is closer to the detection device 102. When the IFQ is ahead of the IFI, it can be determined that the object 40 is away from the detection device 102. Thus, by using the IFI and I and IFQ, the detection unit 32 can determine whether the object 40 is closer to or away from the detection device 102.

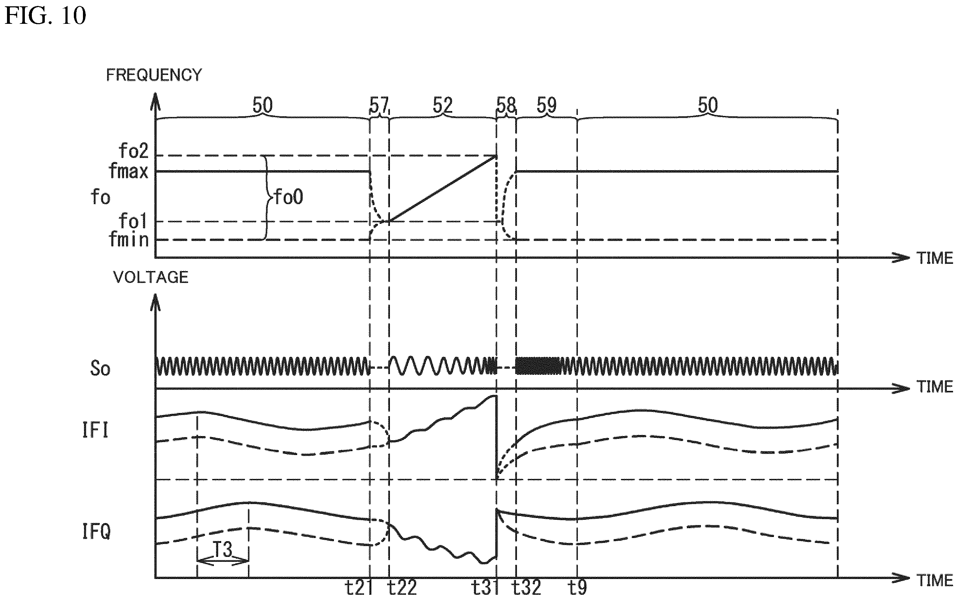

FIG. 10 is another example of a timing chart of the detection device according to the second embodiment. In the period 52, the frequency fo rises from fo1 to fo2, and the period 52 ends. Therefore, the difference between the voltage at time t21 and the voltage at the end of period 52 of IFI and IFQ whose voltages change according to the sweep waveform of oscillation signal So becomes large. Therefore, even if the frequency fo is stabilized to fmax or fmin at time t32, a period 59 between time t32 and time t9 is required until the voltages of IFI and IFQ return to the voltage at time t21 and stabilize.

On the other hand, in FIG. 9, in the period 52, the frequency fo of the transmission signal is swept from the first frequency fo1 to the second frequency fo2, and then swept from the second frequency fo2 to the first frequency fo1. As a result, the frequency of the oscillation signal So at time t31 returns to the frequency at time t21. Therefore, the period from time t31 until the voltages of IF1 and IF2 return to the voltages at time t21 can be shorter than that in the case of FIG. 10, and the voltages of IFI and IFQ are stabilized during the period 58. Therefore, the detection by the Doppler method can be resumed earlier than that in the case of FIG. 10.

In the present embodiment, the frequency of the oscillation signal So is swept from fo1 to fo2 during the period from time t22 to time t5, and the frequency of the oscillation signal So is swept from fo2 to fo1 during the period from time t5 to time t31. Therefore, the distance of the object 40 can be measured in the period from time t22 to time t5 and in the period from time t5 to time t31. The measurement accuracy of the distance can be improved by averaging the distances measured twice. In the first and second embodiments, an example in which fo2 is higher than fo1 has been described, but fo2 may be lower than fo1.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

**Claims**

1. A detection device (100, 102) comprising:

   an oscillator (18) configured to output an oscillation signal (So);
   a controller (34) configured to output a control signal for controlling a frequency of the oscillation signal to the oscillator (18);
   a transmitter (14) configured to transmit an electromagnetic wave or a sound wave as a transmission signal having the same frequency as the oscillation signal (So);
   a receiver (12) configured to receive a signal obtained by reflecting the transmission signal from an object, as a reception signal;
   a mixer (16, 16a, 16b) configured to mix the oscillation signal and the reception signal and output a mixed signal as an intermediate signal; and
   a detector (32) configured to detect a motion of the object and a distance to the object from the intermediate signal;
   **characterized in that**
   when a request (Rq) for distance measurement is not inputted from an external device (60), the controller controls the oscillator (18) so as to set the frequency (fo) of the oscillation signal (So) to a constant frequency (fo0), and the detector performs first sampling of the intermediate signal at first sampling times (Sp1) according to a first sampling frequency defined by a first time interval (T1) in a first sampling period (50) to detect the motion of the object,
   when the request (Rq) for distance measurement is input from the external device, the controller controls the oscillator (18) so as to sweep the frequency (fo) of the oscillation signal (So), and the detector performs second sampling of the intermediate signal, at second sampling times (Sp2) according to a second sampling frequency defined by a second time interval (T2) smaller than the first time interval (T1) in a second sampling period (52) shorter than the first sampling period (50) to detect the distance to the object, the second sampling period (52) being between adjacent first sampling periods (50), and
   the second sampling period (52) is shorter than the first time interval (T1).

2. The detection device according to claim 1, wherein the transmitter outputs the transmission signal having a fixed frequency during the first sampling period (50), and outputs the transmission signal obtained by sweeping a frequency during the second sampling period.

3. The detection device according to claim 2, wherein in the second period, the transmitter sweeps the frequency of the transmission signal from a first frequency to a second frequency, and then sweeps the frequency from the second frequency to the first frequency.

4. The detection device according to any one of claims 1 to 3, further comprising:

   a band separation filter (22) that separates the intermediate signal into a first intermediate signal (IF1) having a first frequency band and a second intermediate signal (IF2) having a second frequency band higher than the first frequency band;
   wherein the detector performs the first sampling on the first intermediate signal and performs the second sampling on the second intermediate signal.

5. A detection method causing a processor to execute a process, the process comprising:

   obtaining an intermediate signal by mixing a transmission signal which has the same frequency as an oscillation signal (So) and is an electromagnetic wave or a sound wave and a reception signal obtained by reflecting the transmission signal on an object;

**characterized in that**

when a request (Rq) for distance measurement is not inputted from an external device (60), controlling an oscillator so as to set a frequency (fo) of the oscillation signal to a constant frequency (fo0), and detecting the motion of an object by performing first sampling of the intermediate signal at first sampling times according to a first sampling frequency defined by a first time interval (T1); and

when the request (Rq) for distance measurement is input from the external device, controlling the oscillator so as to sweep the frequency of the oscillation signal, and detecting a distance to the object by performing second sampling of the intermediate signal, at second sampling times (Sp2) according to a second sampling frequency defined by a second time interval (T2) smaller than the first time interval (T1) in a second sampling period (52) shorter than the first sampling period (50), the second sampling period (52) being between adjacent first sampling periods (50),

wherein the second sampling period (52) is shorter than the first time interval (T1).

6. One or more computer programs comprising instructions which, when executed by a computer, cause the computer to carry out the method of claim 5.

7. A computer-readable storage medium having the one or more programs of claim 6 stored thereon.

**Patentansprüche**

1. Detektionsvorrichtung (100, 102), die Folgendes umfasst:

einen Oszillator (18), der dazu konfiguriert ist, ein Oszillationssignal (So) auszugeben;
eine Steuerung (34), die dazu konfiguriert ist, ein Steuersignal zum Steuern einer Frequenz des Oszillationssignals an den Oszillator (18) auszugeben;
einen Sender (14), der dazu konfiguriert ist, eine elektromagnetische Welle oder eine Schallwelle als Sendesignal, das die gleiche Frequenz wie das Oszillationssignal (So) aufweist, zu senden;
einen Empfänger (12), der dazu konfiguriert ist, ein Signal, das durch Reflektieren des Sendesignals von einem Objekt erlangt wird, als Empfangssignal zu empfangen;
einen Mischer (16, 16a, 16b), der dazu konfiguriert ist, das Oszillationssignal und das Empfangssignal zu mischen und ein gemischtes Signal als Zwischensignal auszugeben; und
einen Detektor (32), der dazu konfiguriert ist, eine Bewegung des Objekts und einen Abstand zu dem Objekt aus dem Zwischensignal zu detektieren;

**dadurch gekennzeichnet, dass**

die Steuerung, wenn eine Anforderung (Rq) zur Abstandsmessung nicht von einer externen Vorrichtung (60) eingegeben wird, den Oszillator (18) so steuert, dass die Frequenz (fo) des Oszillationssignals (So) auf eine konstante Frequenz (fo0) festgelegt wird, und der Detektor eine erste Abtastung des Zwischensignals zu ersten Abtastzeiten (Sp1) gemäß einer ersten Abtastfrequenz durchführt, die durch ein erstes Zeitintervall (T1) in einer ersten Abtastperiode (50) definiert ist, um die Bewegung des Objekts zu detektieren,

die Steuerung, wenn die Anforderung (Rq) zur Abstandsmessung von der externen Vorrichtung eingegeben wird, den Oszillator (18) so steuert, dass die Frequenz (fo) des Oszillationssignals (So) wobbelt, und der Detektor eine zweite Abtastung des Zwischensignals zu zweiten Abtastzeiten (Sp2) gemäß einer zweiten Abtastfrequenz durchführt, die durch ein zweites Zeitintervall (T2), das kürzer als das erste Zeitintervall (T1) ist, in einer zweiten Abtastperiode (52), die kürzer als die erste Abtastperiode (50) ist, definiert ist, um den Abstand zu dem Objekt zu detektieren, wobei die zweite Abtastperiode (52) zwischen benachbarten ersten Abtastperioden (50) liegt, und

die zweite Abtastperiode (52) kürzer als das erste Zeitintervall (T1) ist.

2. Detektionsvorrichtung nach Anspruch 1, wobei der Sender das Sendesignal, das eine feste Frequenz aufweist, während der ersten Abtastperiode (50) ausgibt und das Sendesignal, das durch Wobbeln einer Frequenz erlangt wird, während der zweiten Abtastperiode ausgibt.

3. Detektionsvorrichtung nach Anspruch 2, wobei der Sender in der zweiten Periode die Frequenz des Sendesignals von einer ersten Frequenz zu einer zweiten Frequenz wobbelt und dann die Frequenz von der zweiten Frequenz zu der ersten Frequenz wobbelt.

4. Detektionsvorrichtung nach einem der Ansprüche 1 bis 3, ferner umfassend:

einen Bandtrennfilter (22), der das Zwischensignal in ein erstes Zwischensignal (IF1), das ein erstes Frequenzband aufweist, und ein zweites Zwischensignal (IF2), das ein zweites Frequenzband aufweist, das höher als das erste Frequenzband ist, trennt;
wobei der Detektor die erste Abtastung an dem ersten Zwischensignal durchführt und die zweite Abtastung an dem zweiten Zwischensignal durchführt.

5. Detektionsverfahren, das einen Prozessor veranlasst, einen Prozess auszuführen, wobei der Prozess Folgendes umfasst:

Erlangen eines Zwischensignals durch Mischen eines Sendesignals, das die gleiche Frequenz wie ein Oszillationssignal (So) aufweist und eine elektromagnetische Welle oder eine Schallwelle ist, und eines Empfangssignals, das durch Reflektieren des Sendesignals an einem Objekt erlangt wird;

**dadurch gekennzeichnet, dass**

wenn eine Anforderung (Rq) zur Abstandsmessung nicht von einer externen Vorrichtung (60) eingegeben wird, ein Oszillator so gesteuert wird, dass eine Frequenz (fo) des Oszillationssignals auf eine konstante Frequenz (fo0) festgelegt wird, und die Bewegung eines Objekts durch Durchführen einer ersten Abtastung des Zwischensignals zu ersten Abtastzeiten gemäß einer ersten Abtastfrequenz, die durch ein erstes Zeitintervall (T1) definiert ist, detektiert wird; und

wenn die Anforderung (Rq) zur Abstandsmessung von der externen Vorrichtung eingegeben wird, der Oszillator so gesteuert wird, dass die Frequenz des Oszillationssignals wobbelt, und ein Abstand zu dem Objekt durch Durchführen einer zweiten Abtastung des Zwischensignals zu zweiten Abtastzeiten (Sp2) gemäß einer zweiten Abtastfrequenz, die durch ein zweites Zeitintervall (T2), das kürzer als das erste Zeitintervall (T1) ist, in einer zweiten Abtastperiode (52), die kürzer als die erste Abtastperiode (50) ist, definiert ist, detektiert wird, wobei die zweite Abtastperiode (52) zwischen benachbarten ersten Abtastperioden (50) liegt,

wobei die zweite Abtastperiode (52) kürzer als das erste Zeitintervall (T1) ist.

6. Ein oder mehrere Computerprogramme, die Anweisungen umfassen, die bei Ausführung durch einen Computer den Computer veranlassen, das Verfahren nach Anspruch 5 durchzuführen.

7. Computerlesbares Speichermedium, auf dem das eine oder mehrere Programme nach Anspruch 6 gespeichert sind.

**Revendications**

1. Dispositif de détection (100, 102), comprenant :

un oscillateur (18) configuré pour émettre un signal d'oscillation (So) ;

un dispositif de commande (34) configuré pour émettre un signal de commande pour commander une fréquence du signal d'oscillation vers l'oscillateur (18) ;

un émetteur (14) configuré pour transmettre une onde électromagnétique ou une onde sonore sous forme de signal de transmission ayant la même fréquence que le signal d'oscillation (So) ;

un récepteur (12) configuré pour recevoir un signal obtenu en réfléchissant le signal de transmission à partir d'un objet, en tant que signal de réception ;

un mélangeur (16, 16a, 16b) configuré pour mélanger le signal d'oscillation et le signal de réception et emettre un signal mixte en tant que signal intermédiaire ; et

un détecteur (32) configuré pour détecter un mouvement de l'objet et une distance à l'objet à partir du signal intermédiaire ;

**caractérisé en ce que**

lorsqu'une demande (Rq) de mesure de distance n'est pas entrée à partir d'un dispositif externe (60), le dispositif de commande commande l'oscillateur (18) de manière à régler la fréquence (fo) du signal d'oscillation (So) à une fréquence constante (fo0), et le détecteur réalise un premier échantillonnage du signal intermédiaire à des premiers instants d'échantillonnage (Sp1) selon une première fréquence d'échantillonnage définie par un premier intervalle de temps (T1) dans une première période d'échantillonnage (50) pour détecter le mouvement de l'objet,

lorsque la demande (Rq) de mesure de distance est entrée à partir du dispositif externe, le dispositif de commande commande l'oscillateur (18) de manière à balayer la fréquence (fo) du signal d'oscillation (So), et le détecteur réalise un second échantillonnage du signal intermédiaire à des seconds instants d'échantillonnage (Sp2) selon une seconde fréquence d'échantillonnage définie par un second intervalle de temps (T2) plus petit que le premier intervalle de temps (T1) dans une seconde période d'échantillonnage (52) plus courte que la première période d'échantillonnage (50) pour détecter la distance à l'objet, la seconde période d'échantillonnage (52) se situant entre les premières périodes échantillonnage (50) adjacentes, et

la seconde période d'échantillonnage (52) est plus courte que le premier intervalle de temps (T1).

2. Dispositif de détection selon la revendication 1, dans lequel

l'émetteur délivre le signal de transmission ayant une fréquence fixe pendant la première période d'échantillonnage (50), et délivre le signal de transmission obtenu en balayant une fréquence pendant la seconde période d'échantillonnage.

3. Dispositif de détection selon la revendication 2, dans lequel
dans la seconde période, l'émetteur balaie la fréquence du signal de transmission d'une première fréquence à une seconde fréquence, puis balaie la fréquence de la seconde fréquence à la première fréquence.

4. Dispositif de détection selon l'une quelconque des revendications 1 à 3, comprenant également :

un filtre de séparation de bande (22) qui sépare le signal intermédiaire en un premier signal intermédiaire (IF1) ayant une première bande de fréquence et un second signal intermédiaire (IF2) ayant une seconde bande de fréquence supérieure à la première bande de fréquence ;
dans lequel le détecteur réalise le premier échantillonnage sur le premier signal intermédiaire et réalise le second échantillonnage sur le second signal intermédiaire.

5. Procédé de détection amenant un processeur à exécuter un processus, le processus comprenant :

l'obtention d'un signal intermédiaire en mélangeant un signal d'émission qui a la même fréquence qu'un signal d'oscillation (So) et qui est une onde électromagnétique ou une onde sonore et un signal de réception obtenu en réfléchissant le signal d'émission sur un objet ;
**caractérisé en ce que**
lorsqu'une demande (Rq) de mesure de distance n'est pas entrée à partir d'un dispositif externe (60), la commande d'un oscillateur de manière à régler la fréquence (fo) du signal d'oscillation à une fréquence constante (fo0), et la détection du mouvement d'un objet en réalisant un premier échantillonnage du signal intermédiaire à des premiers instants d'échantillonnage selon une première fréquence d'échantillonnage définie par un premier intervalle de temps (T1) ; et
lorsque la demande (Rq) de mesure de distance est entrée à partir du dispositif externe, la commande de l'oscillateur de manière à balayer la fréquence du signal d'oscillation, et la détection d'une distance à l'objet en réalisant un second échantillonnage du signal intermédiaire à des seconds instants d'échantillonnage (Sp2) selon une seconde fréquence d'échantillonnage définie par un second intervalle de temps (T2) plus petit que le premier intervalle de temps (T1) dans une seconde période d'échantillonnage (52) plus courte que la première période d'échantillonnage (50), la seconde période d'échantillonnage (52) se situant entre les premières périodes échantillonnage (50) adjacentes, dans lequel la seconde période d'échantillonnage (52) est plus courte que le premier intervalle de temps (T1).

6. Un ou plusieurs programmes d'ordinateur comprenant des instructions qui, lorsqu'elles sont exécutées par un ordinateur, amènent l'ordinateur à réaliser le procédé selon la revendication 5.

7. Support de stockage lisible par ordinateur sur lequel sont stockés les un ou plusieurs programmes selon la revendication 6.

FIG. 1

EP 4 310 542 B1

FIG. 2

```
                    ┌─────────────┐
                    │    START    │
                    └──────┬──────┘
                           ▼
                    ┌─────────────┐
                    │  ACTIVATE   │───S10
                    └──────┬──────┘
                           ▼
                    ┌─────────────┐
                    │   SET SP1   │───S12
                    └──────┬──────┘
                           ▼
                    ┌─────────────┐
                    │ PERFORM SP1 │───S14
                    └──────┬──────┘
                           ▼                    S16
                    ╱─────────────╲       No
                   ╱      Rq?       ╲──────────────►
                    ╲───────┬───────╱
                           │ Yes
                           ▼
                    ┌─────────────┐
                    │SWITCH TO SP2│───S18
                    └──────┬──────┘
                           ▼
                    ┌─────────────┐
                    │ PERFORM SP2 │───S20
                    └──────┬──────┘
                           ▼                    S22
                    ╱─────────────╲       No
                   ╱    IS SP2      ╲──────────┐
                   ╲  COMPLETED ?   ╱
                    ╲───────┬───────╱
                           │ Yes
                           ▼
                    ┌─────────────┐
                    │SWITCH TO SP1│───S23
                    └──────┬──────┘
                           ▼
                    ┌─────────────┐
                    │  CALCULATE  │───S24
                    │INFORMATION I2│
                    └──────┬──────┘
                           ▼
                    ┌─────────────┐
                    │   OUTPUT    │───S26
                    │INFORMATION I2│
                    └──────┬──────┘     S28
                           ▼
                    ╱─────────────╲       No
                   ╱    IS SP1      ╲──────────────►
                   ╲  COMPLETED ?   ╱
                    ╲───────┬───────╱
                           │ Yes
                           ▼
                    ┌─────────────┐
                    │   END SP1   │───S29
                    └──────┬──────┘
                           ▼
                    ┌─────────────┐
                    │  CALCULATE  │───S30
                    │INFORMATION I1│
                    └──────┬──────┘
                           ▼
                    ┌─────────────┐
                    │   OUTPUT    │───S32
                    │INFORMATION I1│
                    └──────┬──────┘    S34
                           ▼
              No    ╱─────────────╲
          ◄────────╱    END ?      ╲
                    ╲───────┬───────╱
                           │ Yes
                           ▼
                    ┌─────────────┐
                    │     END     │
                    └─────────────┘
```

FIG. 3

FREQUENCY

fo
fo0

TIME

VOLTAGE

SP1a    SP1b

SP1

IF

T1        T1

t1        t2 t3        t4    TIME

Rq

SAMPLING

50        52        50

EP 4 310 542 B1

FIG. 4

FIG. 5

EP 4 310 542 B1

FIG. 6

FIG. 7

FIG. 8

EP 4 310 542 B1

FIG. 9

FIG. 10

EP 4 310 542 B1

**EP 4 310 542 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019049521 A
- JP 7077575 A
- JP 9178839 A
- US 2018356511 A1
- US 4078235 A
- JP 2017134795 A